# EUROPÄISCHE PATENTSCHRIFT

(11) **EP 0 417 592 B1**
(45) Veröffentlichungstag und Bekanntmachung des Hinweises auf die Patenterteilung: **01.03.1995**
(21) Anmeldenummer: 90116885.6
(22) Anmeldetag: 03.09.1990
(51) Int. Cl.: B01D 5/00, B01D 8/00, F25D 17/02, F26B 25/00

(54) **Anlage und Verfahren zur Rückgewinnung von Lösungsmitteln**
Device and process of the recuperation of solvents
Dispositif et procédé de récupération de solvants

(30) Priorität: 11.09.1989 DE 3930238; 06.11.1989 DE 3936834
(43) Veröffentlichungstag der Anmeldung: 20.03.1991
(73) Patentinhaber: HERCO-KÜHLTECHNIK HERMANNS & CO. GMBH, D-46474 Wesel (DE); AIR PRODUCTS GMBH WERK HATTINGEN, D-45527 Hattingen (DE)
(72) Erfinder: Hermanns, Klaus, Dr. rer. nat., D-4224 Hünxe 2 (DE); Kusenberg, Gerhard, D-4230 Wesel (DE); Hagenbruck, Norbert, D-4200 Oberhausen 11 (DE); Karthaus, Michael, Dipl.-Ing., D-4040 Neuss 21 (DE)
(74) Vertreter: Schwabe - Sandmair - Marx

(56) Entgegenhaltungen:
- EP-A- 0 094 172
- DE-A- 2 725 252
- GB-A- 2 063 442
- GB-A- 2 137 518
- US-A- 4 324 052

## Beschreibung

Die Erfindung betrifft eine Anlage sowie ein Verfahren zur Rückgewinnung von Lösungsmitteln, insbesondere für Herstellungsanlagen von bahnartigen Materialien, vorzugsweise Ton- und Videobändern, nach den Oberbegriffen der unabhängigen Patentansprüche.

In modernen Herstellungsanlagen besteht häufig ein Bedarf mit inerten Gasen, insbesondere mit Flüssigstickstoff, mit Lösungsmitteln kontaminierte Gase zu reinigen. Der Übergang zur flüssigen Phase des auszukondensierenden Lösungsmittels liegt dabei in der Regel über der Verdampfungskurve von flüssigem Stickstoff. Dabei können erhebliche Funktionsschwierigkeiten, insbesondere bei der Regelung der Austrittstemperatur für das Trägergas auftreten.

Aus der DE-C-1 032 218 sind ein Verfahren und eine Vorrichtung zur fraktionierten Kondensation von chemischen Dampfgemischen bekannt, wobei das zu fraktionierende Dampfgemisch in stufenweise hintereinander geschalteten Kondensationsbehältern behandelt wird. In jeder Kondensationsstufe wird zwischen dem eigentlichen Kühlmedium, nämlich Luft, und dem zu fraktionierenden Dampfgemisch ein Zwischenmedium eingesetzt. Die hier angesprochenen chemischen Dampfgemische sind sämtlich bei relativ hohen Temperaturen fraktionierbar. Das möglicherweise vorhandenen Restgas, z.B. Luft oder ein inertes Gas, das gereinigt werden soll, enthält hier einen hohen Anteil von Resten des zu fraktionierenden chemischen Dampfgemisches.

Aus der DE-A-1 419 190 sind gleichfalls ein Verfahren sowie eine Vorrichtung zur Kondensation von chemischen Dampfgemischen bekannt. Auch hier werden bei relativ hohen Temperaturen siedende chemische Dampfgemische mittels einer Luftkühlung und einem Zwischenmedium so kondensiert, daß das Kondensat zwar einerseits nicht ausfriert, andererseits aber eine möglichst weitgehende Kondensation stattfindet. Dabei beschäftigt sich diese Offenlegungsschrift hauptsächlich mit der Regelung der zugehörigen Parameter.

Aus der EP-B-0 124 997 und der dazu korrespondierenden US-A-4 545 134 ist ein Verfahren zur Rückgewinnung von Lösungsmitteldampf bekannt. Bei diesem Verfahren wird zum einen ein Inertgaskreislauf zum Ausheizen von Lösungsmitteln aus einem Produkt innerhalb eines Ofens und zum anderen ein Tieftemperaturteil, das zu dem Ofen gehörige Schleusen versorgt, beschrieben. Der Inertgaskreislauf ist hier ein abgeschlossener Kreislauf, der dem Ofen immer wieder zugeführt wird, nachdem das Inertgas, im allgemeinen Stickstoff, bis auf einen sicherheitstechnisch relevanten Restanteil von Lösungsmitteln befreit worden ist. Der bei der Reinigung des Inertgases anfallende gasförmige Stickstoff wird zur Versorgung der Schleusen verwendet. Dabei sind die Schleusen so ausgestaltet, daß zwischen dem Inertgaskreislauf und dem Ofen kein Gasaustausch stattfindet.

Bei dem Verfahren nach der EP-B-0 124 997 ist ein relativ hoher Aufwand an Energie notwendig, um die Lösungsmittel zurückzugewinnen, und um die für die Aushärtung der Produkte bzw. zur Verdampfung der Lösungsmittel aus den Produkten notwendigen Temperatur im Ofen aufrechtzuerhalten.

In der "Technische Information, Rückgewinnung organischer Lösemittel aus Abluft", BASF, Januar 1989, sind auf den Seiten 17 - 19 eine Anlage und ein Verfahren zur Rückgewinnung von Lösungsmitteln beschrieben. Danach gelangt lösungsmittelbeladener Stickstoff, z.B. aus einem Trockner einer Beschichtungsanlage, über einen Rekuperator in einen indirekt gekühlten Kondensator, der mit Flüssigkeit aus einer Kältemaschine beschickt ist. In diesen beiden Stufen kondensiert die Hauptmenge der Lösungsmittelanteile aus der Gasphase. Sie wird in einem Lösungsmittelabscheider gesammelt und mit einer Lösungsmittelpumpe in einen Vorratstank abgegeben. Der abgereicherte, kalte Stickstoffstrom aus dem Lösungsmittelabscheider wird im Rekuperator zum Vorkühlen des warmen, lösungsmittelbeladenen Stickstoffstroms aus dem Trockner genutzt. Dabei wird er selbst vor der Einleitung in den Trockner erwärmt und verbessert so die Wärmebilanz des Trockenprozesses. Ein Teilstrom des gereinigten Stickstoffs aus dem Lösungsmittelabscheider wird vor dem Rekuperator abgezweigt und mittels einer Pumpe durch einen Tieftemperaturkondensator gezogen. In diesem Tieftemperaturkondensator wird der Lösungsmittelanteil gezielt bis unter die nach der TA Luft zugelassenen Restgehalt reduziert. Der praktisch restlos gereinigte Stickstoff wird in Schleusenkammern des Trockners eingespeist und dient dort zum Ausgleich der Stickstoffbilanz und als Sperrmedium des Trockners nach außen. Damit beginnt der Stickstoffkreislauf erneut. Trockner und Rückgewinnungsteil werden bei Normaldruck betrieben, lediglich die Schleusen des Trockners stehen unter leichtem Überdruck, um sowohl ein Eindringen von Luft als auch ein Austreten von hochbeladenem Kreislaufgas sicher zu vermeiden.

Ein Tieftemperaturteil zur Verwendung bei der Rückgewinnung eines als Dampf in einem Gas enthaltenen, niedrigsiedenden Stoffes ist schließlich aus der DE-A 2 633 227 bekannt. Als Tieftemperaturteil dient ein in eine obere, eine mittlere und eine untere Kammer unterteiltes Isoliergefäß. Die obere Kammer steht mit der mittleren Kammer über eine obere Wärmetauscherfläche, und die mittlere Kammer steht mit der unteren Kammer über eine untere Wärmetauscherfläche in wärmetauschender Berührung. Die obere Kammer ist mit einem Einlaß für die Einführung von Flüssigkeit auf die obere Wärmetauscherfläche und mit einem Auslaß zur Gasführung aus der Kammer ausgestattet. Die untere Kammer ist mit einem Einlaß zur Einführung von Gas in Berührung mit der unteren Wärmetauscherfläche und einem Auslaß zur Gasabführung nach dessen Inberührungbringung mit der Wärmetauscherfläche und mit einem Auslaß zur Abführung der Flüssigkeit ausgestattet, die an der unteren Wärmetauscherfläche kondensiert. Die mittlere Kammer besitzt einen Gaseinlaß. Die obere und die untere Wärmetauscherfläche sind derart angeordnet, daß die durch den Einlaß in die obere Kammer eingeführte Flüssigkeit über der oberen Wärmetauscherfläche verteilt wird und die an der oberen Wärmetauscherfläche kondensierende Flüssigkeit über der unteren Wärmetauscherfläche verteilt wird.

Es ist die Aufgabe der vorliegenden Erfindung, eine Anlage und ein Verfahren entsprechend der "Technische Information" zur Wiedergewinnung von Lösungsmittel weiterzuentwickeln, womit insbesondere ein geringer Aufwand an Energie bei gleichzeitig hocheffektiver Lösungsmittelrückgewinnung ermöglicht werden, und wobei ein für die Hochreinigung eines mit Lösungsmittelresten beladenen Gases vorgesehener Tieftemperaturteil in einer möglichst einfachen und kompakten Bauform ausgeführt sein soll.

Diese Aufgabe wird durch ein Verfahren bzw. durch eine Anlage mit den Merkmalen der unabhängigen Ansprüche gelöst.

Zweckmäßige Verfahrensvarianten bzw. Ausführungsformen der erfindungsgemäßen Anlage werden durch die Merkmale in den Unteransprüchen definiert.

In einem Wärmetauscher wird ein größerer Teil eines Gases, das hinter einem Lösungsmittelabscheider über eine Leitung rückgeführt wird, gegen den Fluß des Gases aus einem Trockner aufgewärmt. Das aufgewärmte Gas wird dann in den Trockner zurückgeführt, wodurch es möglich ist, in dem Trockner ohne großen Energieaufwand die erforderlichen Trocknungstemperaturen aufrechtzuerhalten.

Der kleinere Teil des Gases wird hinter dem Lösungsmittelabscheider in einen Tieftemperaturteil geleitet, um von Lösungsmittelresten befreit zu werden. Anschließend wird der kleinere Teil zumindest mit einem Teil des dabei verdampften inerten Gases, durch das die tiefen Temperaturen im Tieftemperaturteil erzeugt werden, ergänzt, um anschließend in den Schleusen einen sowohl nach innen in den Trockner als auch nach draußen, einen positiven Fluß zu erzeugen. Dabei entspricht der abgezogene kleinere Teil des Gases hinter dem Lösungsmittelabscheider dem positiven Fluß von den Schleusen in den Trockner. Hierdurch ist sowohl gewährleistet, daß der Inertgaskreislauf, der den Trockner mit Gas versorgt, von der Außenwelt ausgeschlossen ist und gleichzeitig permanent durch sehr reines Gas ergänzt wird. Dadurch wiederum wird die Trocknungsintensität im Trockner verstärkt.

Ein Kondensator, der dem Wärmetauscher nachgeschaltet ist, sorgt dafür, daß der Hauptteil des Lösungsmittels aus dem Trocknungsgas, das von dem Trockner stammt, ausgefällt wird. Der Kondensator wird hierfür in der Regel von einer Kältemaschine mit Fremdkälte versorgt. Das hierbei im Kondensator stehende Zweiphasengemisch - flüssiges Lösungsmittel/weitgehend gereinigter Stickstoff - wird im Lösungsmittelabscheider getrennt.

Das zurückgewonnene Lösungsmittel wird in einem Behälter zwischengelagert und mit einer Pumpe zu einem Tanklager gefördert.

Ein besonderer Aspekt der Erfindung ist, daß der Tieftemperaturteil zur weiteren Aufbereitung bzw. weiteren Reinigung des kleineren Teils des hinter dem Lösungsmittelabscheider abgeführten Gases verwendet wird. Dabei wird in dem Tieftemperaturteil flüssiger Stickstoff aus einem Tank verwendet. Der Tieftemperaturteil weist einen ersten Wärmetauscher auf, in dem die zum Verdampfen des flüssigen Stickstoffs und zum Erwärmen des verdampften Stickstoffs erforderliche Enthalpie einem flüssigen Kälteträger entzogen wird. Außerdem ist ein zweiter Wärmetauscher vorhanden, der die für die Wiedererwärmung des Kälteträgers notwendige Enthalpie dem mit dem Lösungsmittel beladenen Gas entzieht, das damit auf eine erforderliche, vorbestimmte Temperatur abgekühlt wird. Schließlich weist der Tieftemperaturteil einen Trägerkreislauf auf, der den Kälteträger zwischen dem ersten und dem zweiten Wärmetauscher zirkulieren läßt.

Der Trägerkreislauf findet in einem geschlossenen Behälter oder Gefäß statt, der den ersten und den zweiten Wärmetauscher im wesentlichen einschließt.

Dabei bedeckt bzw. umgibt der Kälteträger den zweiten Wärmetauscher, durch den das mit Resten von Lösungsmittel beladene Gas geleitet wird im wesentlichen.

Außergewöhnlich vorteilhaft ist, daß dem Kälteträger die zum Verdampfen des aus dem Tank stammenden flüssigen Stickstoffs erforderliche Enthalpie durch Kondensation entzogen wird, und der dabei verflüssigte Kälteträger durch die Aufnahme von Enthalpie von dem Trägergas wieder verdampft wird, wodurch das Trägergas auf die erforderliche, vorbestimmte Temperatur abgekühlt wird.

Auf diese Weise ist es möglich, die Lösungsmittelreste aus dem kleineren Teil des Trocknungsgases zu entfernen, und dabei trotz der Verwendung von einem Kältespender, der Temperaturen aufweist, die das auszufällende Lösungsmittel in die feste Phase übertreten lassen würden, das auszufällende Lösungsmittel nur auf Temperatur etwas unterhalb seiner Kondensationstemperatur abzukühlen, wodurch es fließfähig bleibt.

Durch die Verwendung dieses sich selbst regulierenden Kälteträgerkreislaufes ist es möglich, zusätzliche Pumpen einzusparen.

Die Austrittstemperatur des Kälteträgers aus dem ersten Wärmetauscher wird durch Regelung der Zufuhr des flüssigen Stickstoffs konstant oder nahezu konstant gehalten.

Die Temperatur des austretenden Trägergases wird durch Regelung der Durchflußmenge des Kälteträgers konstant oder nahezu konstant gehalten.

Die Temperatur des aus dem zweiten Wärmetauscher austretenden Trägergases wird durch Regelung der Zufuhr flüssigen Stickstoffs in dem ersten Wärmetauscher konstant oder nahezu konstant gehalten. Der Umlauf des flüssigen Kälteträgers kann auch durch thermischen Auftrieb bewirkt werden.

Vorteilhafterweise können als Kälteträger Freone, z.B. R12 oder R22, verwendet werden.

Derartige Maßnahmen sind in der nachveröffentlichten deutschen Patentanmeldung DE-A-38 27 813. nicht angesprochen. In der nachveröffentlichten Druckschrift wird beschrieben, wie aus der Abluft, die beim Umfüllen von Otto-Kraftstoffen, also z.B. Benzin, anfällt Kohlenwasserstoffe ausgeschieden werden können. Die gereinigte Abluft soll dann in die Atmosphäre abgegeben werden.

Im folgenden wird das erfindungsgemäße Verfahren bzw. die erfindungsgemäße Anlage anhand der anliegenden Figuren erläutert. Dabei werden weitere Vorteile und Merkmale gemäß der vorliegenden Erfindung offenbart. Es zeigen:
- Figur 1: eine schematische Darstellung einer Lösungsmittelrückgewinnungsanlage, die erfindungsgemäß mit dem Tieftemperaturteil gemäß Figur 3 betrieben wird;
- Figur 2: eine prinzipielle Darstellung eines Tieftemperaturteils gemäß Figur 1, (nicht erfindungsgemäß) und
- Figur 3: ein erfindungsgemäßes Tieftemperaturteil, wie es in einer Anlage gemäß Figur 1 eingesetzt werden kann.

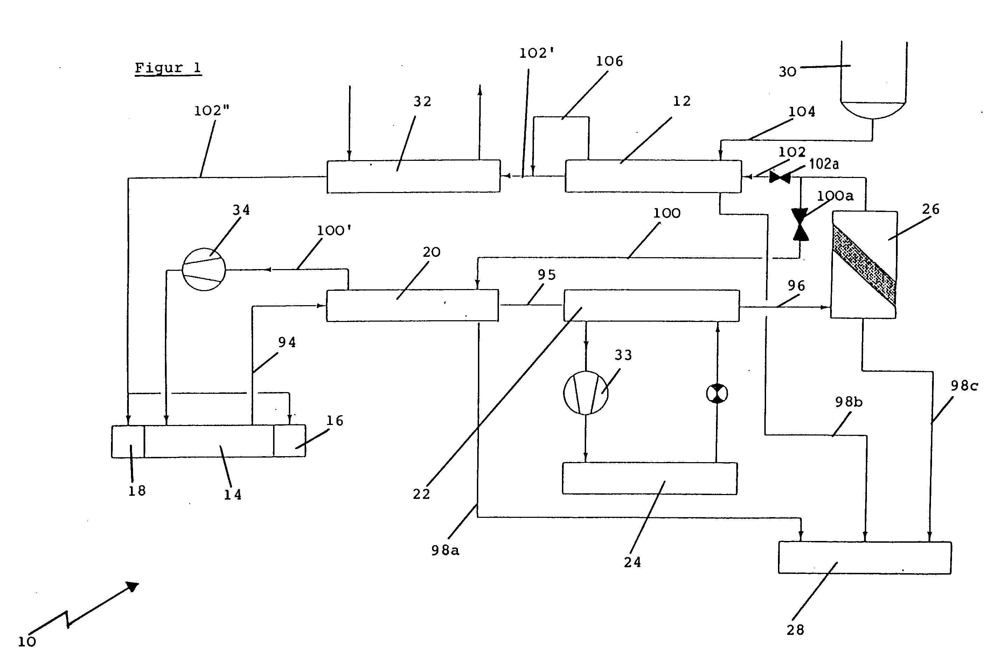

In Figur 1 ist die Anlage allgemein durch das Bezugszeichen 10 gekennzeichnet.

Ein Trockner 14 ist mit einer Eingangsschleuse 18 und einer Ausgangsschleuse 16 versehen. Über die Eingangsschleuse 18 wird der Trockner 14 z.B. mit bahnartigem Material beschickt, das den Trockner 14 durch die Ausgangsschleuse 16 wieder verläßt. Während des Aufenthalts im Bereich des Trockners 14 werden Lösungsmittelreste aus dem zu bearbeitenden Produkt entfernt.

Über eine Leitung 94 ist der Trockner 14 mit einem Wärmetauscher 20 verbunden. Der Wärmetauscher 20 wiederum ist über eine Rohrleitung 95 an einen Kondensator 22 angeschlossen. Im Wärmetauscher 20 kondensiertes Lösungsmittel wird über eine Rohrleitung 98a in einen Lösungsmittelbehälter 28 geleitet.

Der Kondensator 22 ist an eine externe Kältemaschine 24 angeschlossen, die den Kondensator auf einer vorbestimmten Temperatur bzw. in einem vorbestimmten Temperaturbereich, hält. Über eine Rohrleitung 96 ist der Kondensator 22 an einen Lösungsmittelabscheider 26 angeschlossen.

Im Lösungsmittelabscheider 26 wird ein aus dem flüssigen Lösungsmittel und dem gereinigten Trocknungsgas, insbesondere Stickstoff, bestehendes Zweiphasengemisch getrennt. Das flüssige Lösungsmittel wird über eine Rohrleitung 98c gleichfalls in den Vorratsbehälter 28 geleitet. Das weitgehend gereinigte Trocknungsgas, Stickstoff, wird aus dem Lösungsmittelabscheider 26 herausgeführt.

Dieses Gas wird über zwei Rohrleitungen 100, 102, bzw. über zwei Ventile 100a, 102a in einen größeren Teil und in einen kleineren Teil getrennt. Der kleinere Teil wird über die Rohrleitung 102 an ein Tieftemperaturteil 12 weitergegeben. Der größere Teil wird über die Rohrleitung 100 zu dem Wärmetauscher 20 zurückgeführt. Eine exakte Feineinstellung der quantitativen Größen des kleineren und des größeren Teils wird über die Ventile 100a, 102a vorgenommen.

Der größere Teil des rückgeführten, gereinigten Trocknungsgases wird im Wärmetauscher 20 gegen das eben erst aus dem Trockner 14 herausgeführte, mit Lösungsmittel stark verunreinigte Trocknungsgas erwärmt, wobei das stark mit Lösungsmitteln beladene Trocknungsgas vorgekühlt wird. Über eine Rohrleitung 100' und ein Fördermittel 34 wird der aufgewärmte größere Teil des Trocknungsgases bzw. Stickstoffes in den Trockner 14 geführt und dort wiederverwendet.

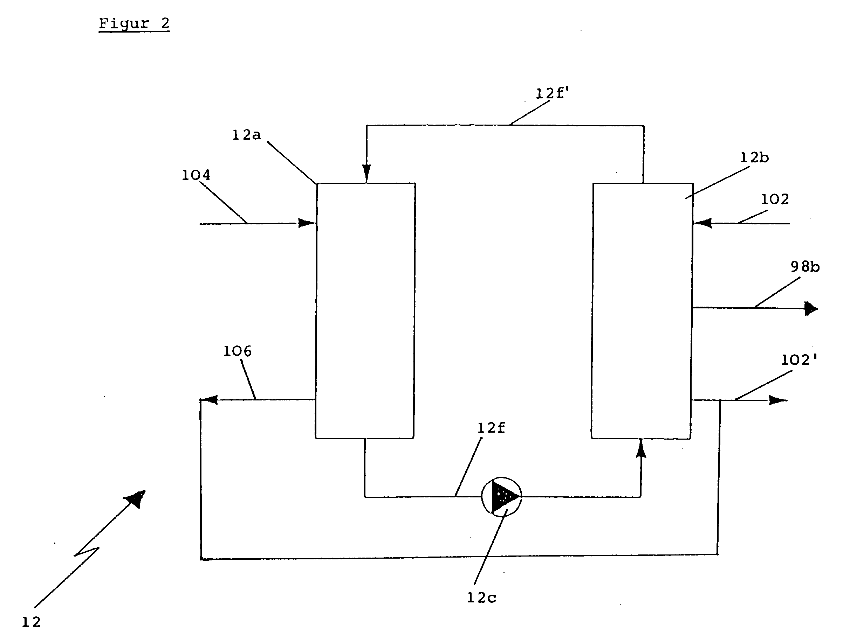

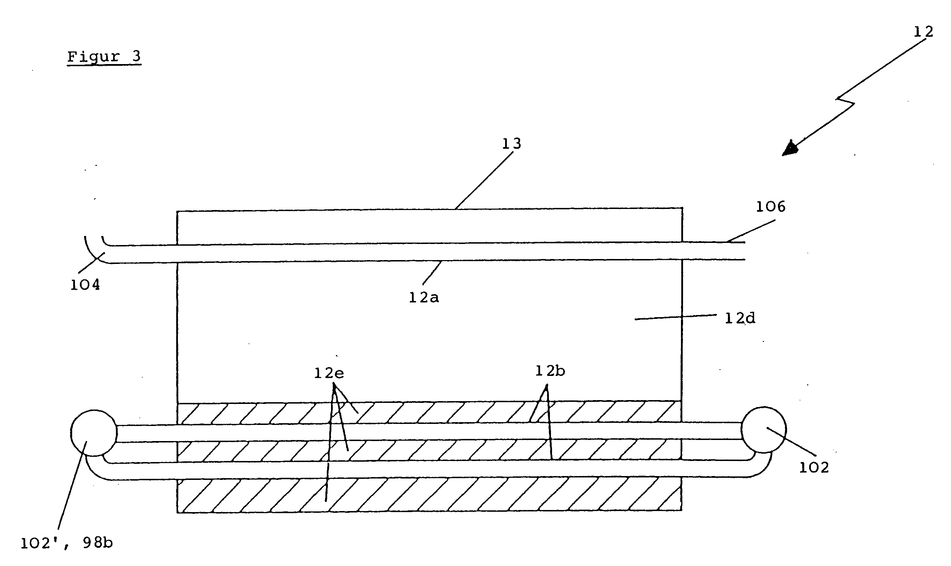

Da der Tieftemperaturteil 12 im Hinblick auf die Figuren 2 und 3 noch gesondert abgehandelt wird, soll er hier nur insoweit erwähnt werden, als darauf hingewiesen wird, daß zur weiteren Reinigung des über die Rohrleitung 102 eingeführten kleineren Teils des Trocknungsgases flüssiger Stickstoff aus einem Vorratsbehälter 30 über eine Rohrleitung 104 zugeführt wird. Im Tieftemperaturteil findet dann ein Wärmeaustausch statt, wobei Lösungsmittelreste aus dem kleineren Teil herauskondensiert werden. Diese Lösungsmittelreste werden über eine Rohrleitung 98b in den Behälter 28 überführt. Die durch den Wärmeaustausch verdampften Mengen an flüssigem Stickstoff aus dem Behälter 30 werden über eine Rohrleitung 106 in eine Rohrleitung 102' eingespeist, die den reinen kleineren Teil des Trocknungsgases bzw. Stickstoffes aus dem Tieftemperaturteil 12 herausführt.

In einem Wärmetauscher 32, der dem Tieftemperaturteil 12 nachgeschaltet ist, wird der resultierende Gasstrom vorgewärmt, bevor er über Rohrleitungen 102'' in die Kammern 16, 18 hineingeführt wird.

Dadurch, daß permanent eine gewisse Menge, der kleinere Teil, aus dem zurückgeführten Trocknungsgas (Stickstoff) entnommen wird, entsteht im Trockner 14 automatisch ein Unterdruck. Dieser Unterdruck entspricht eben dem abgezweigten kleineren Teil, der durch den im Tieftemperaturteil 12 verdampften Stickstoff, der aus dem Vorratsbehälter 30 stammt, ergänzt wird. Dieses führt zu einem positiven Massenfluß sowohl in das Innere des Trockners als auch in die externe Atmosphäre, so daß sichergestellt ist, daß einerseits keine externe Atmosphäre in den Trockner 14 gelangt und andererseits kein Lösungsmittel aus dem Trockner 14 herauskommt. Außerdem führt die permanente Ergänzung mit nicht vorbenutztem Stickstoff dazu, daß im Trockner 14 noch bessere Trocknungseffekte erzielt werden.

Der verfahrensmäßige Ablauf in der erfindungsgemäßen Anlage ist wie folgt: Durch den Trockner 14 sowie die Kammern 18, 16 wird ein zu trocknendes Produkt hindurchgeführt. Die heiße Trocknungsatmosphäre im Trockner 14 sorgt dafür, daß die überschüssigen Lösungsmittel aus dem Produkt herausgelöst werden. Das lösungsmittelbeladene Trocknungsgas, im folgenden einfach Stickstoff genannt, wird von dem Trockner 14 in den Wärmetauscher 20 geleitet und dort vorgekühlt. Hochsiedende Lösungsmittelkomponenten werden hier bereits zum Teil kondensiert. Der Hauptzweck dieses Apparates ist jedoch die Wärmegewinnung. Vorgekühlt und von hochsiedenden Komponenten befreit, verläßt der Stickstoff den Kondensator 20 und gelangt in einen weiteren Wärmetauscher 22, in dem der Hauptteil an Lösungsmittel aus dem Stickstoff gegen Fremdkälte kondensiert wird. Die Fremdkälte wird von einer externen Kältemaschine 24 geliefert.

Durch die Kühlung wird das Gasgemisch im Wärmetauscher 22 in ein Zweiphasengemisch aus flüssigem Lösungsmittel und gereinigtem Stickstoff aufgespalten und in einem Lösungsmittelabscheider 26 getrennt.

Der gereinigte Stickstoff strömt aus dem Lösungsmittelabscheider 26 heraus und wird anschließend in einen größeren Teil und einen kleineren Teil getrennt. Zur genauen Dosierung stehen hier Ventile 100a, 102a zur Verfügung.

Der größere Teil des gereinigten Stickstoffs wird über die Rohrleitung 100 in den Wärmetauscher bzw. Vorkühler 20 geleitet, um dort angewärmt zu werden. Der Ventilator 34 saugt den Stickstoff ab und fördert ihn zurück in den Trockner 14. Der kleinere Teil des gereinigten Stickstoffs wird zur weiteren Reinigung über das Ventil 102a und die Rohrleitung 102 in den Tieftemperaturtrockner geführt, wo eine kryogene Reinigungsprozedur stattfindet. Diese wird für die Figuren 2 und 3 noch weiter beschrieben.

Der sehr reine Stickstoff verläßt den Tieftemperaturteil 12 über die Rohrleitung 102' und wird über eine Rohrleitung 106 mit dem bei der kryogenen Reinigungsprozedur angefallenen, unbenutzten verdampften Stickstoff zusammengeführt, vermischt und an einen Wärmetauscher 32 übergeben, in dem der Stickstoff angewärmt wird bevor er über ein weiteres Rohrleitungssystem 102'' in die Kammern 18, 16 eingeleitet wird. Hier wird, wie bereits oben angedeutet, damit in den Trockner 14 kein Sauerstoff einbricht und Lösungsmittel den Trockner nicht verlassen kann, durch Stickstoffbeaufschlagung der Schleusen 18, 16 ein Vorhang geschaffen. Aus diesem Stickstoffvorhang heraus entsteht ein positiver Stickstofffluß sowohl in den Trockner 14 hinein, als auch in die externe Atmosphäre. Der Spülstickstoffbedarf wird aus dem Behälter 30 entnommen. Um den positiven Fluß von den Schleusen 18, 16 in den Trockner 14 zu gewährleisten, wird dem Inertgaskreislauf ständig Stickstoff, der kleinere Teil, hinter dem Abscheider 26 entzogen.

In der erfindungsgemäßen Anlage ist der Tieftemperaturteil 12 eine besonders kritische Komponente.

Der Kältelieferant ist in der Regel flüssiger Stickstoff mit einer Siedetemperatur von -195,75°C (77,4 K) und einer Verdampfungsenthalpie von 201 kJ/kg. Die spezifische Wärmekapazität des gasförmigen Stickstoffs beträgt nur 1,038 kJ/(kg K), so daß ca. 2/3 der für die Abkühlung des Trägergases auf ca. -100°C erforderlichen Kälte bei Stickstofftemperaturen von -195,75°C übertragen werden müssen. Hierdurch treten zwei erhebliche Probleme auf:
1. Die Regelung der Menge flüssigen Stickstoffs, die zur Abkühlung des Trägergas-Lösungsmittelgemisches erforderlich ist und
2. die Vermeidung von Sublimation von Lösungsmitteln im Tieftemperaturkondensator.

Diese Gefahr besteht für fast alle Lösungsmittel und ist um so größer, je höher der Schmelzpunkt des Lösungsmittels ist.

Beide Probleme können durch Zwischenschalten eines Wärme- (Kälte-)Trägerkreislaufes mit möglichst hoher Wärmekapazität gelöst werden, wie in folgendem näher beschrieben wird. In Figur 2 ist eine nicht erfindungsgemäße Anordnung für einen Tieftemperaturteil allgemein durch das Bezugszeichen 12 gekennzeichnet. Hier wird zunächst in einem Wärmetauscher 12a ein flüssiger Kälteträger, z.B. Freone, wie R12 oder R22, durch einen verdampfenden Stickstoff auf eine vorgegebene Temperatur (z.B. -140°C) gekühlt. Der Kälteträger wird mit Hilfe einer Pumpe 12c einem zweiten Wärmetauscher 12b zugeführt, indem das Trägergas auf die vorgesehene Temperatur abgekühlt wird. Die Regelung der Austrittstemperatur kann durch Regelung der Kälteträgerdurchflußmenge erreicht werden und/oder durch Regelung der Zufuhr flüssigen Stickstoffs. Bei genügendem thermischen Auftrieb kann auf die Pumpe 12c verzichtet werden, um den Kälteträger im Kälteträgerkreislauf 12f zirkulieren zu lassen.

Über die Rohrleitung 104 wird der flüssige Stickstoff in den Wärmetauscher 12a eingespeist. Im Wärmetauscher 12a entzieht der flüssige Stickstoff dem Kälteträger, der in dem Leitungssystem 12f zirkuliert, Wärme und verdampft dabei. Der verdampfte Stickstoff verläßt den Wärmetauscher 12a über die Rohrleitung 106 und wird in die Rohrleitung 102' eingeleitet. Diese Einleitung geschieht in der Regel zumindest zum Teil um den besagten positiven Fluß in den Kammern 16, 18 in beiden Richtungen aufrechtzuhalten.

Das kalte Trägermedium wird durch eine gegebenenfalls vorhandene Pumpe 12c über eine Leitung bzw. Rohrleitung 12f in den Wärmetauscher 12b überführt. In dem Wärmetauscher 12b nimmt das Zwischenträgermedium Wärme aus dem kleineren Teil des gereinigten Stickstoffs auf, wobei im gereinigten Stickstoff verbliebene Lösungsmittelreste kondensieren. Die kondensierten Lösungsmittelreste werden über eine Rohrleitung 98b zum Vorratsbehälter 28 geleitet.

Das erwärmte Zwischenträgermedium wird wiederum aus dem Wärmetauscher 12b in den Wärmetauscher 12a über die obere Leitung 12f' zurückgeführt.

Eine erfindungsgemäße Ausgestaltungsform eines Tieftemperaturteiles 12 geht aus Figur 3 hervor. Hier besteht der Tieftemperaturteil 12 aus einem Behälter bzw. einem Gefäß 13, in dem der Wärmetauscher 12a und der Wärmetauscher 12b im wesentlichen eingeschlossen sind. Der Wärmetauscher 12b, durch den der mit Lösungsmittelresten beladene Stickstoff hindurchgeführt wird, ist von einer Flüssigkeit 12e im wesentlichen bedeckt. Ein Raum 12d oberhalb des Zwischenmediums 12e bleibt frei. Durch den Wärmetauscher 12a wird über die Rohrleitung 104 flüssiger Stickstoff hindurchgeleitet, der beim Wärmeaustausch im Wärmetauscher 12a verdampft wird und den Tieftemperaturteil 12 über die Rohrleitung 106 verläßt.

Im Bereich 102', 98b des Wärmetauschers 12b liegt wiederum ein Zweiphasengemisch vor, das aus sehr reinem Stickstoff und kondensiertem Lösungsmittel besteht. Der Behälter 13 ist in der Regel als Druckgefäß ausgeführt.

Die Funktionsweise der erfindungsgemäßen Komponente gemäß Figur 3 wird wie folgt beschrieben: Der untere Teil des Druckgefäßes 13 ist mit einer Flüssigkeit 12e, z.B. Freonen R12 oder R22, gefüllt. Durch diese Flüssigkeit führen die Rohre des Wärmetauschers 12b, die von dem Stickstoff/Lösungsmittelgemisch durchströmt werden. Durch den oberen Teil 12d des Druckgefäßes 13 sind die Rohre des Wärmetauschers 12a geführt, in denen flüssiger Stickstoff verdampft wird. Den durch den unteren Teil des Gefäßes 13 führenden Rohren des Wärmetauschers 12b wird gereinigter Stickstoff mit einer Temperatur von z.B. -30°C zugeführt. Im Wärmetauscher 12b findet eine Abkühlung auf z.B. -90°C statt. Die bei der Abkühlung anfallende Enthalpie wird an die umgebende Flüssigkeit 12e abgegeben. Hierdurch verdampft die Flüssigkeit 12e zum Teil. Der Dampf steigt in den oberen Teil 12d des Druckgefäßes 13 auf und wird dort durch Enthalpieentzug mittels verdampfendem Stickstoff, der durch den Wärmetauscher 12a hindurchgeführt wird, wieder kondensiert. Die sich bildenden Tropfen fallen nach unten und halten den Flüssigkeitsspiegel der Flüssigkeit 12e im unteren Gefäßteil des Gefäßes 13 konstant.

Da die Wärmeübertragung sowohl im unteren, wie auch im oberen Teil des Gefäßes 13 unter Wechsel des Aggregatzustandes erfolgt, werden hohe Wärmeübergangszahlen realisiert. Deshalb kann der Tieftemperaturteil 12 entsprechend klein gebaut werden. Eine Pumpe 12c erübrigt sich hier.

## Patentansprüche

1. Lösungsmittelrückgewinnungsanlage, insbesondere für Herstellungsanlagen von bahnartigen Materialien, vorzugsweise Ton- und Videobändern,
a) mit einem Trockner (14) für die Entfernung von Lösungsmitteln aus einem Produkt oder Zwischenprodukt unter Verwendung eines inerten Gases, insbesondere Stickstoff;
b) mit mindestens einer Eintrittsschleuse (18) und mindestens einer Austrittsschleuse (16) für den Trockner (14);
c) mit einem Wärmetauscher (20), in dem das mit Lösnungsmittel beladene Gas vorgekühlt wird;
d) mit einem Kondensator (22), in dem vorgekühltes Gas von dem Hauptteil des Lösungsmittels befreit wird;
e) mit einem dem Kondensator (22) nachgeschalteten Lösungsmittelabscheider (26);
f) mit einem Tieftemperaturteil (12), der mit einem flüssigen, inerten Gas als Kühlmittel betrieben wird, wobei es sich um das gleiche inerte Gas wie das im Trockner (14) verwendete handelt;
g) mit hinter dem Lösungsmittelabscheider (26) angeordneten Regelungsmitteln (102a, 100a) zur Aufteilung des vom Hauptteil des Lösungsmittel befreiten Gases in zwei Teile, wobei
h) hinter dem Lösungsmittelabscheider (26) über eine Leitung (100, 100') ein erster Teil des inerten Gases in den Wärmetauscher (20) rückgeführt wird und gegen den Fluß des Gases aus dem Trockner (14) angewärmt wird, um gefuhrt zu werden dann in den Trockner (14) zurück; und
i) ein zweiter Teil des Gases hinter dem Lösungsmittelabscheider (26) in den Tieftemperaturteil (12) geleitet wird, um von Lösungsmittelresten befreit zu werden, um mit einem dabei verdampfenden Teil an inertem, als Kühlmittel dienendem Gas ergänzt zu werden, um anschließend in den Schleusen (16, 18) sowohl nach innen in den Trockner (14) als auch nach außen einen positiven Gasfluß zu erzeugen,
**gekennzeichnet durch** die folgenden Merkmale:
k) der erste Teil ist größer als der zweite Teil des Gases;
l) der Tieftemperaturteil (12) weist einen ersten Wärmetauscher (12a) auf, der dem flüssigen, als Kühlmittel dienenden Gas die zum Verdampfen und zum Erwärmen des verdampften Gases erforderliche Enthalpie von einem Zwischenkälteträger (12e) zuführt;
m) der Tieftemperaturteil (12) weist einen zweiten, durch den Zwischenkälteträger (12e) gekühlten Wärmetauscher (12b) auf, der dem zweiten Teil des Gases die zur Kondensation der Lösungsmittelreste erforderliche Enthalpie entzieht;
n) der Enthalpie-Austausch erfolgt durch Phasenumwandlung des Zwischenkälteträgers (12e) vom dampfförmigen in den flüssigen Zustand über den ersten Wärmetauscher (12a) und vom flüssigen in den dampfförmigen Zustand über den zweiten Wärmetauscher (12b);
o) der Tieftemperaturteil (12) wird durch ein Druckgefäß (13) gebildet;
p) der untere Teil dieses Druckgefäßes (13) ist mit dem flüssigen Zwischenkälteträger (12e) gefüllt, über dem ein Raum (12d) frei bleibt; und
q) der erste Wärmetauscher (12a), durch den das Kühlmittel geführt wird, ist in dem freien Raum (12d) angeordnet und der zweite Wärmetauscher (12b), durch den das mit Lösungsmittelresten beladene Gas hindurchgeführt wird, ist von dem flüssigen Zwischenkälteträger (12e) umgeben.

2. Verfahren zur Lösungsmittelrückgewinnung, insbesondere für Herstellungsanlagen von bahnartigen Materialien, vorzugsweise Ton- und Videobändern, bei dem
a) aus einem Trockner (14) ein mit Lösungsmittel beladenes inertes Gas, insbesondere Stickstoff, entzogen wird,
b) das mit Lösungsmittel beladene Gas von Lösungsmitteln vorgereinigt wird,
c) das vorgereinigte Gas in zwei Teile (100, 110'; 102) aufgeteilt wird, mit einem ersten Teil (100, 100'), der in den Trockner (14) zurückgeführt wird und mit einem zweiten Teil (102), der einem Tieftemperaturteil (12) zugeführt und in dem Tieftemperaturteil (12) zusätzlich gereinigt wird,
d) dem zweiten, zusätzlich gereinigten Teil (102) ein in dem Trockner (14) noch nicht benutztes inertes Gas, bei dem es sich um das gleiche inerte Gas wie das im Trockner (14) verwendete handelt, beigemengt wird und
e) das Gasgemisch aus kryogen gereinigtem Gas und unbenutztem Gas einer Eintrittschleuse (16) und einer Austrittschleuse (18) für den Trockner (14) zugeführt wird, wobei
f) durch die Differenz zwischen dem aus dem Trockner (14) abgezogenen Gas und dem zurückgeführten ersten Teil (100, 100') und der Beimengung des noch nicht benutzten Gases ein positiver Massenfluß aus den Schleusen (16, 18) sowohl in den Trockner (14) als auch in die externe Atmosphäre eingestellt wird, der im wesentlichen dem kryogen gereinigten zweiten Teil (102) entspricht,
**dadurch gekennzeichnet,** daß
g) der erste Teil (100, 100') des vorgereinigten Gases größer als der zweite Teil (102) ist,
h) dem flüssigen, als Kühlmittel dienenden Gas die zum Verdampfen und Erwärmen des verdampften Gases erforderliche Enthalpie von einem Zwischenkälteträger (12e) zugeführt wird,
i) dem zweiten Teil (102) des vorgereinigten Gases die zur Kondensation von Lösungsmittelresten erforderliche Enthalpie entzogen wird, und
k) der Enthalpie-Austausch zum Verdampfen und zum Erwärmen des als Kühlmittel dienenden Gases durch Phasenumwandlung des Zwischenkälteträgers (12e) vom dampfförmigen in den flüssigen Zustand und zur Kondensation der Lösungsmittelreste durch Phasenumwandlung des Zwischenkälteträgers (12e) vom flüssigen in den dampfförmigen Zustand erfolgt;
l) als Tieftemperaturteil (12) ein Druckgefäß (13) verwendet wird, dessen unterer Teil mit dem flüssigen Zwischenkälteträger (12e) gefüllt ist, über dem ein Raum (12d) frei bleibt; und daß
m) das Kühlmittel in einem ersten Wärmetauscher (12a) durch den freien Raum (12d) und das mit Lösungsmittelresten beladene Gas in einem zweiten Wärmetauscher (12b) durch den flüssigen Zwischenkälteträger (12e) geführt werden.

3. Verfahren nach Anspruch 2, dadurch gekennzeichnet, daß das aus dem Trockner (14) abgeführte, mit Lösungsmitteln beladene Gas im Wärmeaustausch gegen den in den Trockner (14) zurückgeführten größeren Teil des Gases steht.

4. Verfahren nach einem der Ansprüche 2 oder 3, dadurch gekennzeichnet, daß das mit Lösungsmitteln beladene, aus dem Trockner (14) abgezogene Gas im Wärmeaustausch mit einer externen Kältequelle (24) vorgereinigt wird.

5. Verfahren nach einem der Ansprüche 2 bis 4, dadurch gekennzeichnet, daß der überwiegende Teil des in dem aus dem Trockner (14) abgezogenen Gas enthaltenen Lösungsmittels in einem Lösungsmittelabscheider (26) abgeschieden wird.

6. Verfahren nach einem der Ansprüche 2 bis 5, dadurch gekennzeichnet, daß der kleinere, kryogen gereinigte Teil des Gases und das als Kühlmittel dienende, verdampfte Gas im externen Wärmeaustausch vorgewärmt werden, bevor dieses Gasgemisch in die Schleusen (16, 18) eingeleitet wird.

7. Verfahren nach einem der Ansprüche 2 bis 6, dadurch gekennzeichnet, daß als Zwischenkälteträger ein Freon, insbesondere R12 oder R22, verwendet wird.

8. Verfahren nach einem der Ansprüche 2 bis 7, dadurch gekennzeichnet, daß über die Zufuhr des flüssigen, als Kühlmittel dienenden Gases die Temperatur des Zwischenkälteträgers (12e) bzw. dessen Übergangsgeschwindigkeit von der flüssigen in die gasförmige Phase gesteuert wird.

9. Verfahren nach Anspruch 8, dadurch gekennzeichnet, daß die Temperatur des Zwischenkälteträgers (12e) beim Enthalpie-Austausch mit dem als Kühlmittel dienenden Gas durch Regelung der Zufuhr dieses Gases konstant oder nahezu konstant gehalten wird.

10. Verfahren nach einem der Ansprüche 2 bis 9, dadurch gekennzeichnet, daß die Temperatur des von Lösungsmittelresten befreiten Gases durch Regelung der Zufuhr des flüssigen, als Kühlmittel dienenden Gases zum Tieftemperaturteil (12) konstant oder nahezu konstant gehalten wird.

11. Verfahren nach einem der Ansprüche 2 bis 10, dadurch gekennzeichnet, daß der Zwischenkälteträger (12e) in einem Druckgefäß (13) durch thermischen Auftrieb des verdampften und durch Zurücktropfen des kondensierten Zwichenkälteträgers (12e) umläuft.

## Claims

1. A solvent recovery apparatus, in particular for manufacturing apparatuses of web-like materials, preferrably audio and video tapes, comprising
a) a drier (14) for the removal of solvents from a product or an intermediate product by using an inert gas, in particular nitrogen;
b) at least one inlet transfer chamber (18) and at least one outlet transfer chamber (16) for the drier (14);
c) a heat exchanger (20) in which the solvent-charged gas is precooled;
d) a condenser (22) in which precooled gas is freed from the majority of the solvent;
e) a solvent separator (26) connected downstream from the condenser (22);
f) a cryogenic member (12) which is operated with a liquid, inert gas as coolant, this being the same inert gas as the gas used in the drier (14);
g) regulating means (102a, 100a) disposed downstream of the solvent separator (26) to separate the gas freed from the majority of solvent into two portions;
h) a first portion of the inert gas being recirculated downstream of the solvent separator (26) via a conduit (100, 100') into the heat exchanger (20) and being heated against the flow of the gas from the drier (14) in order to subsequently be resupplied to the drier (14); and
i) a second portion of the gas being supplied downstream of the solvent separator (26) into the cryogenic member (12) so as to be freed from solvent residues so as to be supplemented with a vaporizing portion of inert gas serving as refrigerant to subsequently produce in the transfer chambers (16, 18) a positive gas flux both to the interior of the drier (14) and to the outside,
**characterized by** the following features:
k) the first portion of the gas is larger than the second portion;
l) the cryogenic member (12) comprises a first heat exchanger (12a) which supplies from the intermediate refrigerant medium (12e) the enthalpy necessary for vaporizing and heating the vaporized gas to the liquid gas used as refrigerant; and
m) the cryogenic member (12) comprises a second heat exchanger (12b) cooled by the intermediate refrigerant (12e), which derives the enthalpy necessary for the condensation of the solvent residues from the second portion of the gas;
n) the enthalpy exchange takes place by phase transition of the intermediate refrigerant medium (12e) from the vaporous to the liquid condition via the first heat exhanger (12a) and from the liquid to the vaporous condition via the second heat exchanger (12b);
o) said cryogenic member (12) is formed by a pressure vessel (13);
p) the lower part of this pressure vessel (13) is filled with the liquid intermediate refrigerant medium (12e), above which a space (12d) remains free; and
q) the first heat exchanger (12a), through which the refrigerant is fed, is disposed in the free space (12d) and the second heat exchanger (12b), through which the gas charged with solvent residues is passed, is surrounded by the liquid intermediate refrigerant medium (12e).

2. A process for the recovery of solvents, in particular for manufacturing apparatuses for web-like materials, preferrably audio and video tapes, in which
a) a solvent-charged inert gas, in particular nitrogen, is withdrawn from a drier (14),
b) the solvent-charged gas is prepurified of solvents,
c) the prepurified gas is separated into two portions (100, 110'; 102), i.e. with a first portion (100, 100') which is recirculated to the drier (14) and with a second portion (102) which is fed to a cryogenic member (12) and is in addition purified in the cryogenic member (12),
d) an inert gas not yet used in the drier (14), which is the same inert gas as that used in the drier (14), is admixed to the second additionally purified portion (102), and
e) the gas mixture of cryogenically purified gas and unused gas is fed to an inlet transfer chamber (16) and an outlet transfer chamber (18) for the drier (14),
where
f) a positive mass flux from the transfer chambers (16, 18) both into the drier (14) as well as into the external atmosphere is adjusted by the difference between the gas withdrawn from the drier (14) and the recirculated first portion (100, 100') and the admixture of the not yet used gas, which corresponds essentially to the cryogenically purified second portion (102),
**characterized in** that
g) the first portion (100, 100') of the prepurified gas is larger than the second portion (102),
h) the enthalpy necessary for the vaporization and heating of the vaporized gas is fed from an intermediate refrigerant medium (12e) to the liquid gas serving as refrigerant,
i) the enthalpy necessary for the condensation of solvent residues is withdrawn from the second portion (102) of the prepurified gas, and
k) the enthalpy exchange for the vaporization and heating of the gas serving as refrigerant takes place by way of phase transition of the intermediate refrigerant medium (12e) from the vaporous to the liquid condition and for the condensation of the solvent residues by phase transition of the intermediate refrigerant medium (12e) from the liquid to vaporous condition;
l) a pressure vessel (13) is used as cryogenic member (12), the lower portion of which is filled with the liquid intermediate refrigerant medium (12e), above which a space (12d) remains free; and that
m) the refrigerant in a first heat exchanger (12a) is fed through the free space (12d) and the gas charged with solvent residues is fed into a second heat exchanger (12b) through the liquid refrigerant medium (12e).

3. A process according to claim 2, **characterized in** that the gas charged with solvents and discharged from the drier (14) is in heat exchange against the larger portion of the gas resupplied to the drier (14).

4. A process according to one of the claims 2 or 3, **characterized in** that the gas charged with solvents and withdrawn from the drier (14) is prepurified in heat exchange with an external source of refrigeration (24).

5. A process according to one of the claims 2 to 4, **characterized in** that the major portion of the solvent contained in the gas withdrawn from the drier (14) is separated in a solvent separator (26).

6. A process according to one of the claims 2 to 5, **characterized in** that the smaller cryogenically-purified portion of gas and the vaporized gas serving as refrigerant are preheated in an external heat exchange before this gas mixture is introduced into the transfer chambers (16, 18).

7. A process according to one of the claims 2 to 6, **characterized in** that freon, in particular R12 or R22, is used as intermediate refrigerant medium.

8. A process according to one of the claims 2 to 7, **characterized in** that the temperature of the intermediate refrigerant medium (12e) and its transition speed from the liquid phase to the gaseous phase is controlled by the supply of the liquid gas serving as refrigerant.

9. A process according to claim 8, **characterized in** that the temperature of the intermediate refrigerant medium (12e) in the enthalpy exchange is held constant or nearly constant with the gas serving as coolant by regulation of the supply of this gas.

10. A process according to one of the claims 2 to 9, **characterized in** that the temperature of the gas freed of solvent residues is held constant or nearly constant by the regulation of the supply of the liquid gas serving as refrigerant to the cryogenic member (12).

11. A process according to one of the claims 2 to 10, **characterized in** that the intermediate refrigerant medium (12e) circulates in a pressure vessel (13) by means of thermal buoyancy of the vaporized intermediate refrigerant medium (12e) and by back-dropping of the condensed intermediate refrigerant medium (12e).

## Revendications

1. Installation de récupération de solvant, en particulier pour installations de fabrication de matériaux en forme de bandes, de préférence des bandes audio et vidéo,
a) comportant un séchoir (14) pour l'extraction de solvants hors d'un produit ou d'un produit intermédiaire, par recours à un gaz inerte, en particulier de l'azote;
b) comportant au moins un sas d'entrée (18) et au moins un sas de sortie (16) pour le séchoir (14);
c) comportant un échangeur de chaleur (20), dans lequel le gaz chargé en solvant est prérefroidi;
d) comportant un condenseur (22) dans lequel le gaz prérefroidi est débarrassé de la majeure partie du solvant;
e) comportant un séparateur de solvant (26) branché en aval du condenseur (22);
f) comportant une partie à basse température (12), qui est utilisée avec un gaz inerte liquéfié servant de fluide frigorifique, qui est le même gaz inerte que celui utilisé dans le séchoir (14);
g) comportant des moyens de régulation (102a, 100a) disposés en aval du séparateur de solvant (26), pour partager en deux parties le gaz débarrassé de la partie principale du solvant, tandis que
h) en aval du séparateur de solvant (26) une première partie du gaz inerte est renvoyée dans l'échangeur de chaleur (20) par une conduite (100, 100'), et est réchauffée par l'écoulement du gaz en provenance du séchoir (14), pour être alors renvoyée dans le séchoir (14), et
i) une seconde partie du gaz est conduite dans la partie à basse température (12), en aval du séparateur de solvant (26), pour être débarrassée de résidus de solvant, et être complétée par une partie, qui s'évapore en cet endroit, d'un gaz inerte servant d'agent de refroidissement, pour ensuite créer dans les sas (16, 18) un flux de gaz positif aussi bien vers l'intérieur du séchoir (14) que vers l'extérieur;
caractérisée par les caractéristiques suivantes:
k) la première partie du gaz est plus grande que la seconde partie;
l) la partie à basse température (12) présente un premier échangeur de chaleur (12a) qui transfère d'un fluide frigorifique intermédiaire (12e) au gaz liquéfié servant d'agent de refroidissement l'enthalpie nécessaire pour la vaporisation et le réchauffage du gaz vaporisé;
m) la partie à basse température (12) présente un second échangeur de chaleur (12b) refroidi par le fluide frigorifique intermédiaire (12e), qui extrait de la seconde partie du gaz l'enthalpie nécessaire pour la condensation des résidus de solvant;
n) l'échange d'enthalpie s'effectue par passage du fluide thermique intermédiaire (12e) de l'état vapeur à l'état liquide, par le premier échangeur de chaleur (12a), et de l'état liquide à l'état vapeur, par le second échangeur de chaleur (12b);
o) la partie à basse température (12) est formée par un réservoir sous pression (13);
p) la partie inférieure de ce réservoir sous pression (13) est remplie du fluide frigorifique intermédiaire (12e), au-dessus duquel un espace (12d) reste libre; et
q) le premier échangeur de chaleur (12a) traversé par le fluide de refroidissement, est disposé dans l'espace libre (12d), et le second échangeur de chaleur (12b), traversé par le gaz chargé en résidus de solvant, est entouré par le fluide frigorifique intermédiaire (12e) liquide.

2. Procédé de récupération de solvant, en particulier pour installations de fabrication de matériaux en forme de bandes, de préférence des bandes audio et vidéo, dans lequel
a) un gaz inerte, en particulier de l'azote, chargé en solvant est extrait d'un séchoir (14),
b) le gaz chargé en solvant est préépuré des solvants,
c) le gaz préépuré est partagé en deux parties (100, 110'; 102), avec une première partie (100, 100') qui est renvoyée dans le séchoir (14) et avec une seconde partie (102) qui est amenée à une partie à basse température (12), et est épurée de manière plus poussée dans la partie à basse température (12),
d) un gaz inerte, non encore utilisé dans le séchoir (14) et qui est le même gaz inerte que celui utilisé dans le séchoir (14), est mélangé à la seconde partie (102) épurée de manière plus poussée, et
e) le mélange de gaz cryogénique épuré et de gaz non utilisé est amené à un sas d'entrée (16) et à un sas de sortie (18) du séchoir (14), tandis que
f) par la différence entre le gaz extrait du séchoir (14) et la première partie (100, 100') recyclée et l'addition du gaz non encore utilisé, on établit un flux massique positif quittant le sas (16, 18), aussi bien vers le séchoir (14) que dans l'atmosphère extérieure, qui correspond essentiellement à la seconde partie (102) cryogénique épurée,
caractérisé en ce que
g) la première partie (100, 100') du gaz préépuré est plus grande que la seconde partie (102),
h) l'enthalpie nécessaire pour vaporiser et réchauffer le gaz vaporisé est transférée au gaz liquéfié servant d'agent de refroidissement par un fluide frigorifique intermédiaire (12e),
i) l'enthalpie nécessaire pour la condensation des résidus de solvants est extraite de la seconde partie (102) du gaz préépuré, et
k) l'échange d'enthalpie pour la vaporisation et pour le réchauffage du gaz servant d'agent de refroidissement s'effectue par passage du fluide frigorifique intermédiaire (12e) de l'état vapeur à l'état liquide, et celle nécessaire pour la condensation des résidus de solvant s'effectue par passage du fluide frigorifique intermédiaire (12e) de l'état liquide à l'état vapeur;
l) on utilise comme partie (12) à basse température un réservoir sous pression (13) dont la partie inférieure est remplie du fluide frigorifique intermédiaire (12e) liquide, au-dessus duquel reste un espace libre (12d); et en ce que
m) l'agent de refroidissement traverse l'espace libre (12d) dans un premier échangeur de chaleur (12a), et le gaz chargé en résidus de solvant traverse le fluide frigorifique intermédiaire liquide (12e) dans un second échangeur de chaleur (12b).

3. Procédé selon la revendication 2, caractérisé en ce que le gaz chargé en solvant extrait du séchoir (14) est en échange thermique avec la majeure partie du gaz recyclée dans le séchoir (14).

4. Procédé selon l'une des revendications 2 ou 3, caractérisé en ce que le gaz chargé en solvant, extrait du séchoir (14), est préépuré par échange thermique avec une source extérieure de chaleur (24).

5. Procédé selon l'une des revendications 2 à 4, caractérisé en ce que la partie prédominante du solvant contenu dans le gaz extrait du séchoir (14) est séparée dans un séparateur de solvant (26).

6. Procédé selon l'une des revendications 2 à 5, caractérisé en ce que la plus petite partie du gaz, épurée, cryogénique, et le gaz vaporisé servant d'agent de refroidissement sont préchauffés par échange thermique externe avant que ce mélange de gaz soit conduit dans les sas (16, 18).

7. Procédé selon l'une des revendications 2 à 6, caractérisé en ce que l'on utilise comme fluide frigorifique intermédiaire un fréon, en particulier R12 ou R22.

8. Procédé selon l'une des revendications 2 à 7, caractérisé en ce que la température du fluide frigorifique intermédiaire (12e) et sa vitesse de passage de la phase liquide dans la phase gazeuse est contrôlée par l'intermédiaire de l'apport du gaz liquéfié servant d'agent de refroidissement.

9. Procédé selon la revendication 8, caractérisé en ce que la température du fluide frigorifique intermédiaire (12e) est maintenue constante ou quasi constante lors de l'échange d'enthalpie avec le gaz servant d'agent de refroidissement, par régulation de l'apport de ce gaz.

10. Procédé selon l'une des revendications 2 à 9, caractérisé en ce que la température du gaz débarrassé des résidus de solvant est maintenue constante ou quasi constante par régulation de l'apport du gaz liquéfié servant d'agent de refroidissement à la partie à basse température (12).

11. Procédé selon l'une des revendications 2 à 10, caractérisé en ce que le fluide frigorifique intermédiaire (12e) circule dans un réservoir sous pression (13) par entraînement thermique du fluide frigorifique intermédiaire (12e) vaporisé, et par égouttage du fluide frigorifique intermédiaire (12e) condensé.
